(19) **Europäisches Patentamt**

**European Patent Office**

**Office européen des brevets**

(11) **EP 0 854 841 B1**

(12) **EUROPEAN PATENT SPECIFICATION**

(45) Date of publication and mention
of the grant of the patent:
**30.05.2001  Bulletin 2001/22**

(51) Int Cl.$^7$: **C01G 33/00**, C01G 35/00

(21) Application number: **96937666.4**

(86) International application number:
**PCT/US96/16109**

(22) Date of filing: **08.10.1996**

(87) International publication number:
**WO 97/13724 (17.04.1997 Gazette 1997/17)**

(54) **NIOBIUM AND TANTALUM PENTOXIDE COMPOUNDS**

NIOB- UND TANTAL-PENTOXID VERBINDUNGEN

COMPOSES DE PENTOXYDES DE NIOBIUM ET DE TANTALE

(84) Designated Contracting States:
**AT BE CH DE DK ES FI FR GB GR IE IT LI LU MC NL PT SE**

(30) Priority: **12.10.1995  US 542286**

(43) Date of publication of application:
**29.07.1998  Bulletin 1998/31**

(73) Proprietor: **CABOT CORPORATION
Boston, Massachusetts 02210-2019 (US)**

(72) Inventors:
• **BROWN, Patrick, M.
Exton, PA 19341 (US)**
• **WU, Rong-Chein, R.
Chelmsford, Massachusetts 01824 (US)**
• **PEDICONE, Raymond, C.
Pottstown, PA 19464 (US)**
• **MADARA, Michael, G.
Reinholds, Pennsylvania 17569 (US)**

(74) Representative: **Attfield, Donald James
Barker Brettell
138 Hagley Road
Edgbaston
Birmingham B16 9PW (GB)**

(56) References cited:
**DE-A- 3 428 788**

## Description

The present invention also relates to novel valve metal compounds, in particular to novel niobium pentoxides, niobium hydrates, tantalum pentoxides and tantalum hydrates and to improved processes for producing such compounds.

BACKGROUND OF THE INVENTION

Valve metals are characterized by a protective oxide surface layer that tends to protect the metal from corrosion and include tantalum, niobium, aluminum, zirconium, tungsten, titanium and hafnium. As used herein the term "valve metal" refers to tantalum and niobium. A commercially valuable form of "valve metal" is a valve metal oxide such as tantalum pentoxide ($Ta_2O_5$) or niobium pentoxide ($Nb_2O_5$). Tantalum and niobium are conventionally extracted from mineral ores with hydrofluoric acid (HF) or mixtures of hydrofluoric acid and sulfuric acid ($HF/H_2SO_4$) forming heptafluoro complexes which are typically separated by solvent extraction, e.g. using methylisobutylketone (MIBK), to provide an aqueous solution of a heptafluoro complex of the valve metal. The valve metal pentoxide is precipitated by treating the heptafluoro complex solution with ammonia and recovered by filtration.

As disclosed in U.S. Patent 5,068,097 valve metal pentoxides are commonly produced in a batch process. It is believed that in conventional batch processes it is difficult to control particle size and particle size distribution of valve metal oxides because such precursors are precipitated over a varying pH range as ammonia is added to the solution. The addition of ammonia raises the pH of the solution; however, the rise in pH occurs over time as the ammonia reacts with the solution. It is believed that the precipitation of valve metal pentoxide precursor begins at a first pH, continues as the pH rises, and ends at a higher pH. The pH at which precipitation actually occurs affects the particle size of the precipitates, and thus it is believed that as precipitation occurs over a range of pH's, different particle sizes are produced, thereby increasing the particle size distribution of valve metal oxide compounds. The precipitation over a wide range of pH in a batch process also makes it difficult to produce valve metal pentoxides of a particular particle size.

We have discovered that this problem can be overcome by the process of the present invention wherein a solvent-extracted, valve metal heptafluoro complex, e.g. from HF digestion of valve metal-containing ore, is processed under controlled temperature, pH and residence time conditions.

SUMMARY OF THE INVENTION

This invention provides valve metal pentoxide precursor and valve metal pentoxide of uniform particle size and narrow particle size distribution. In one aspect the invention provides valve metal pentoxide having large, dense, spherical agglomerates of particles, relatively low surface area and high bulk density characterized more particularly as tantalum pentoxide having BET surface area less than 3 square meters per gram ($m^2/g$) and bulk density of at least 3 grams per cubic centimeter (g/cc) for $Ta_2O_5$ and as niobium pentoxide having BET less than 2 $m^2/g$ and bulk density greater than 1.2 g/cc. Another aspect of the invention provides valve metal pentoxide of fine particles with relatively high surface area and low bulk density characterized more particularly as tantalum pentoxide having BET surface area greater than 3 $m^2/g$ and a bulk density less than 3 g/cc for and as niobium pentoxide having a BET surface area greater than 2 $m^2/g$ and a bulk density less than 1.2 g/cc. This invention also provides a process for producing valve metal pentoxides, such as tantalum pentoxide or niobium pentoxide, with a narrow particle size distribution within a desired particle size range.

The present invention also provides a process for producing valve metal oxides, such as tantalum pentoxide or niobium pentoxide. The process of the present invention may be advantageously utilized to produce valve metal pentoxides with a narrow particle size distribution within a desired particle size range. This process comprises reacting valve metal fluoro complexes with ammonia under controlled temperature, pH and residence time conditions in a series of two or more stirred reactors to precipitate hydrated valve metal pentoxide precursor.

This invention also provides valve metal pentoxide precursor characterized by having a line broadened d-values under x-ray analysis of 6 ± 0.3, 3 ± 0.2 and 1.8 ± 0.1. Such precursor is a hydrated oxide which is also characterized as having a low fluoride content, e.g. less than 500 ppm.

BRIEF DESCRIPTION OF THE DRAWINGS:

Figure 1 illustrates a reactor system for carrying out a preferred process of the present invention.

Figures 2a, 2b, 2c and 2d are scanning electron microscope (SEM) photographs of a calcined niobium pentoxide powder of the present invention produced in the manner described in Example 3 below.

Figures 3a, 3b, 3c and 3d are SEM photographs of a calcined niobium pentoxide powder of the present invention produced in the manner described in Example 5 below.

Figures 4a, 4b, 4c and 4d are SEM photographs of a calcined tantalum pentoxide powder of the present invention produced in the manner described in Example 9 below.

Figures 5a, 5b, 5c and 5d are SEM photographs of a calcined tantalum pentoxide powder of the present invention produced in the manner described in Example 10 below.

DETAILED DESCRIPTION OF THE INVENTION:

This invention provides a novel and improved process for producing valve metal pentoxide comprising:

(a) providing in a first vessel a mixture of an ammonia solution and an aqueous solution comprising fluoride ion and valve metal-fluoro compound selected from the group consisting of fluorotantalic acid and niobium oxyfluoride at temperature, pH and residence time conditions to initiate precipitation of a hydrated valve metal pentoxide precursor;

(b) transferring said mixture into at least one other vessel for mixing at temperature, pH and residence time conditions to further precipitate a hydrated valve metal pentoxide precursor; and

(c) separating said hydrated valve metal pentoxide precursor from said mixture and converting said hydrated valve metal pentoxide precursor to valve metal pentoxide, e.g. by calcination.

Product purity may be controlled by the purity of the valve metal complex fed into the reactor system. Complexing agents, such as ethylenediaminetetraacetic acid (EDTA) and the like, may be added to the aqueous fluoro-solution to aid in retaining impurities in solution.

A preferred method for controlling the reaction temperature, pH, and residence time is through the use of continuous, stirred tank reactors, e.g. a cascading draft tube reactor system, where the reaction between the valve metal fluoro complex and ammonia is begun in a first reaction vessel at a first pH and temperature, and then continues through one or more additional reaction vessels which may be maintained at different pH's and/or different temperatures. In this process the first pH (in the first vessel) and the second pH (in the second vessel) may be substantially the same or different, and may be controlled independently. Where it is desired to further control the second pH, the process may also include the additional step of introducing a second ammonia solution into the second vessel and mixing the second ammonia solution and the first mixture to obtain the second mixture at the second pH and to react the first mixture and the second ammonia solution to continue precipitation of valve metal pentoxide precursor. Although a first and a second reaction vessel have been described, additional reaction vessels may be utilized to further control the process. For example, two reaction vessels, maintained at slightly different pH's could be substituted for the first and/or the second vessel, thereby raising the total number of reaction vessels to four or five. In a preferred embodiment the process includes the additional step of transferring the second mixture into a third vessel maintained at a third temperature and further mixing the second mixture to complete precipitation of hydrated valve metal pentoxide precursor prior to converting the hydrated valve metal pentoxide precursor to valve metal pentoxide. A further advantage is that the present invention provides a continuous process for producing valve metal pentoxides with a narrow particle size distribution within a desired particle size range.

The hydrated valve-metal pentoxide precursor will generally comprise a valve-metal pentoxide hydrate. Conversion from hydrated valve-metal pentoxide precursor to valve metal pentoxide may be accomplished by calcining or by a hydrothermal process. Hydrated tantalum-oxide precursors can be converted to tantalum pentoxide by calcining at temperatures of at least 790° C. Niobium-oxide precursors can be converted to niobium pentoxide by calcining at temperatures of at least 650° C.

The residence time for the reactions in each vessel may be controlled by the rate at which solutions are introduced into and transferred from the vessels. Control of the residence time impacts particle size and density. Increased residence time increases particle size and density. Temperature can also impact particle size; higher temperatures tend to speed precipitation reaction and generate finer particles.

In the preferred methods of the present invention, controlling the pH and temperature of each vessel allows the production of valve metal pentoxides (e.g., tantalum or niobium pentoxides), having desired particle sizes and narrow particle size distributions to be produced. In the process of the present invention pH may be controlled by controlling the addition of ammonia. The first pH (the pH in the first vessel) should be maintained at a level sufficient to initiate precipitation of the tantalum or niobium pentoxide product. Generally, the first pH should range from 6 to 9.5, preferably from 7 to 8 for agglomerated particles. The second pH (the pH in the second vessel) should most preferably be maintained at a level sufficient to assure substantially complete precipitation of the tantalum or niobium pentoxide precursor. Generally the second pH should range from 8 to 9.5, preferably from 8 to 8.5. When the first pH in the first reaction vessel is towards the acidic side, addition of the second ammonia solution in the second vessel may be necessary to achieve the desired second pH.

In a preferred three vessel embodiment of the process of the present invention, no additional ammonia is added in the third vessel, and the pH of the third vessel will be substantially the same as, or slightly less than, the pH in the second vessel thus assuring that the precipitation reactions proceed to substantial completion.

The choice of pH for each vessel will determine, in part, the particle size of the pentoxide product produced by the process. In general, the extremes of pH, i.e. near 6 and 9.5, in the first vessel are advantageous for producing fine particle sizes, with pH's in the middle of the range, i.e. near 7.5, being advantageous for producing substantially spherical (coarse) particle sizes.

As used herein, residence time refers to the time period in which a reaction or reactions occur. Total or overall residence time for the process is the sum of the residence time in each reaction vessel. The minimum residence time for the process is a residence time sufficient to precipitate valve metal pentoxide precursor. The maximum residence time for the process will generally be dictated by the desired product and the economics of the process. In general, for given pH and temperature, shorter total residence time is desirable for producing fine particle size and longer total residence time is desirable for producing coarse substantially spherical particle sizes. It is also advantageous for the total residence time to be the shortest time for a given temperature and pH which allows substantially complete conversion of the valve metal-fluoro compound to the desired hydrated valve metal pentoxide precursor. As will be understood by those of ordinary skill in the art, longer residence times may be achieved by recycling of the solid phase.

Operating at elevated temperatures shifts the following reactions to the right, thus promoting completion of the reaction in the production of hydrated valve metal oxide precursor:

$$H_2TaF_7 + 7NH_4OH \rightarrow Ta(OH)_5 + 7NH_4F + 2 H_2O$$

$$H_2NbOF_5 + 5NH_4OH \rightarrow Nb(OH)_5 + 5NH_4F + H_2O.$$

The temperature of the reaction vessels may be controlled by conventional means including water jackets and the like. Generally, for large scale production, the temperature of each vessel will range from 40 to 95° C. For given pH and residence time, higher temperature will produce finer particles and lower temperature will produce coarser particles.

For a two reactor system, the relationship between pH, temperature and residence time, may be generally summarized as follows:

| Particle | Residence | | | |
|---|---|---|---|---|
| Size | Time | Temperature | First pH | Second pH |
| Fine | Shorter | Higher | > 8 or < 7 | 8-9.5 |
| Coarse | Longer | Lower | 7-8 | 8-9.5 |

This table is provided by way of illustration only, and is not meant, nor should be construed, to limit the scope of the process of the present invention.

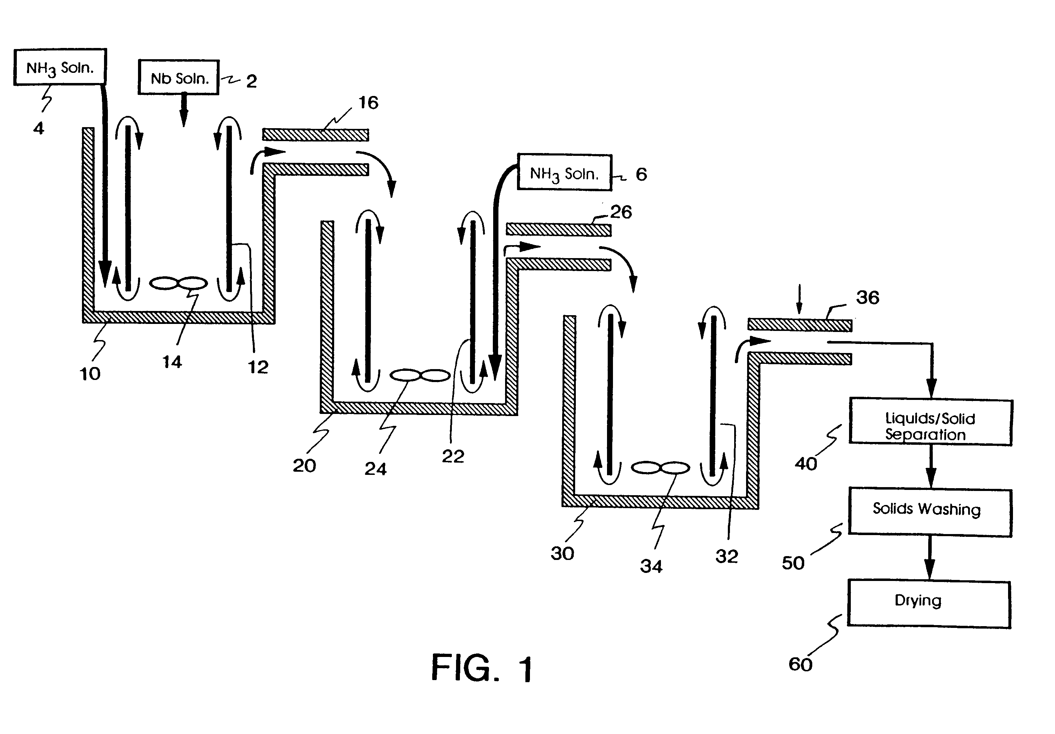

With reference to Figure 1, there is shown a flow diagram of a cascading draft tube reactor system suitable for carrying out a preferred embodiment of the present invention comprising a series of reaction vessels, with draft tubes, and circulation (stirring) means. Such reaction vessels, draft tubes, and circulation means suitable for use in the process of the present invention are commercially known, and therefore are not described in detail herein. Moreover, the process of the present invention is not limited to being performed by particular equipment, and may be performed by a wide variety of different equipment suitable for carrying out the process steps described above and below.

In a preferred process of the present invention, a valve metal fluoro complex-containing solution 2, e.g. from digestion and separation of a niobium containing ore, is added to the top center of a first reaction vessel 10. The rate of addition of the valve metal-containing solution 2 will depend on the size of the reaction vessel, the desired residence time for the reactions occurring in the vessel, and the rate at which the first mixture is transferred out of the vessel. These variables will be adjusted depending upon the type of particles desired.

An ammonia solution 4 is added to the bottom outer periphery of the first reaction vessel 10 outside the area defined by draft tube 12. The rate of addition of the ammonia solution 4 will also depend on the size of the reaction vessel, the desired residence time for the reactions occurring in the vessel, and the rate at which the first mixture is transferred out of the vessel. In addition, the rate of addition of the ammonia solution 4 will depend on the desired pH of the first mixture ($pH_1$) determined, in part, by the particle size desired in the final product. Generally, $pH_1$ ranges from 6 to 9.5. For a given temperature and residence time, $pH_1$ values near the extremes of the range (near 6 or 9) will produce a finer particle size in the final product while $pH_1$ values near the center of the range (between 7 and 8) will produce a coarse spherical particle size in the final product.

The first reaction vessel 10 is maintained at a first temperature ($T_1$) determined, in part, by the desired particle size of the final product. Generally, $T_1$ ranges from 30 to 95°C, and preferably from 50 to 70°C. For a given pH and residence time, higher values for $T_1$ will result in final product having finer particle sizes. Heat transfer means, e.g. a water jacket, (not shown in Figure 1) may be utilized to maintain the reaction vessels at desired temperature.

Circulation means 14, e.g. stirrer or pump, is utilized to circulate and mix the valve metal-containing solution 2 and the ammonia solution 4 within reaction vessel 10 to create a first mixture. The direction of flow of the first mixture within the first reaction vessel may be as shown by the arrows. During circulation, a portion of the first mixture will exit the first reaction vessel through conduit 16. The residence time for the reaction occurring in the first reaction vessel, $R_1$, may be controlled by varying the throughput rate, and/or the size of the reactor and will determine, in part, the density of the final product. For certain reactor sizes, $R_1$ can range from about 2 minutes to 2 hours. For a given $pH_1$ and $T_1$, higher values for $R_1$ will result in a final product having packed bulk densities, e.g. of 1.2 g/cc or more.

The portion of the first mixture that exits the first reaction vessel 10 through conduit 16 is introduced into the inner periphery of a second reaction vessel 20 inside the area defined by draft tube 22. The rate of addition of the first mixture into the second reaction vessel 20 will depend on the rate at which the first mixture is transferred out of the first reaction vessel 10. An ammonia solution 6 is added to the outer periphery and near the bottom of the second reaction vessel 20 outside the area defined by draft tube 22. The rate of addition of the ammonia solution 6 will depend upon the size of the second reaction vessel, the desired residence time for the reactions occurring in the second reaction vessel, and the rate at which the first mixture is transferred into the second reaction vessel. In addition, the rate of addition of the ammonia solution 6 will depend on the desired pH of the second mixture ($pH_2$) determined, in part, by the desired particle size of the final product. Generally, $pH_2$ ranges from 8 to 9.5, depending upon the pH of the first reactor. For a given temperature and residence time, the $pH_2$ value is selected to assure complete reaction while limiting the amount of ammonia consumed.

The second reaction vessel 20 is maintained at a second temperature, $T_2$, determined, in part, by the desired density of particles in the final product and the rate of reaction. Generally, $T_2$ ranges from 30 to 95 °C, preferably 60 to 85 °C. For a given pH and residence time, a higher value for $T_2$ will result in final product with a finer particle size. Circulation means 24 is used to circulate and mix the mixture entering the second reaction vessel and the ammonia solution 6 within reaction vessel 10 to create a second mixture. The direction of flow of the second mixture within the second reaction vessel is shown by the arrows. Reversal of flow can effect particle characteristics depending on desired products.

During circulation, a portion of the second mixture will exit the second reaction vessel through conduit 26.

The residence time for the reaction occurring in the second reaction vessel, $R_2$, can be controlled by varying the circulation rate and the size of the reactor and will determine, in part, the completion of reaction within the second vessel. To some degree it allows further precipitating and densification of the particles. Thus, by varying $R_2$, different particle size products may be produced. $R_2$ can range from 2 to 90 minutes. For a given $pH_2$ and $T_2$, a higher value for $R_2$ will result in final product having denser and coarser particles.

The portion of the second mixture that exits the second reaction vessel 20 through conduit 26 is introduced into the inner periphery of a third reaction vessel 30 inside the area defined by draft tube 32. The rate of addition of the second mixture into the third reaction vessel 30 will depend on the rate at which the second mixture is transferred out of the second reaction vessel 20.

Circulation means 34 are utilized to circulate and continue mixing of the second mixture in the third reaction vessel to allow the precipitation of niobium pentoxide to proceed to substantial completion. The direction of flow of the second mixture within the third reaction vessel is shown by the arrows but is not a limiting characteristic of the reaction. In cases where no additional ammonia is added to the third reaction vessel, the pH of the mixture in the third reaction vessel, $pH_3$, will be slightly less than $pH_2$ depending upon the degree of reaction completion in the third reaction vessel along with ammonia volatilization rates.

The third reaction vessel 30 is maintained at a third temperature, $T_3$, determined, in part, by the degree of reaction completion desired in the vessel. Generally, $T_3$ ranges from 40 to 95 °C, preferably 60 to 85°C. For a given pH and residence time, a higher value for $T_3$ will result in final product reaction being essentially complete. During circulation, a portion of the mixture will exit the third reaction vessel through an exit conduit 36. The residence time for the reactions occurring in the third reaction vessel may be controlled by varying the circulation rate and size of the reaction vessel. The residence time of the mixture in the third reaction vessel, $R_3$, will determine, in part, the completion of reaction to the final product. Thus, by varying $R_3$, different degrees of reaction may be produced. $R_3$ can range from 2 to 90 minutes. For a given $pH_3$ and $T_3$, higher values for $R_3$ will result in final product having denser particles.

The solution exiting the third reaction vessel 30 through exit conduit 36 travels to conventional processing equipment wherein precipitated valve metal pentoxide precursor solids are recovered from the solution by liquid/solids separation step 40. The liquid/solids separation step may be performed in any manner known to the art, such as by filtration. Preferably the liquid/solids separation step is performed by a vacuum or pressure filter.

As will be understood by those of ordinary skill in the art, the overall residence time, or the residence time in a reaction vessel may be increased by recycling all, or a portion, of the solution and/or solids exiting each vessel. In particular, an effective way of increasing overall residence time would be to recycle all or a portion of the precipitated solids formed by the process back into the initial vessel. Where recycling is utilized, the effective residence times in each vessel, and/or the effective overall residence time, may be greater than those set forth above for at least a portion of the reacting solution.

After separation of the niobium pentoxide solids, the solids which are not recycled may be washed as shown by solids washing step 50. Solids washing may be accomplished in manners conventional in the art, such as by washing with ammoniated water at a pH of about 9.0.

After washing, the solids are dried, as shown by drying step 60. The resulting product is a hydrated valve metal pentoxide powder having a narrow particle size distribution and a desired particle size. Calcination of the hydrated valve metal pentoxide converts the hydrate to the valve metal pentoxide, e.g. niobium pentoxide, $Nb_2O_5$ or tantalum pentoxide $Ta_2O_5$.

Although the addition of materials and reagents has been described with reference to particular portions of the reaction vessels, the materials and reagents may be added to alternative portions of the reaction vessels in order to produce pentoxide products with different characteristics. For example, in the first reaction vessel, the valve metal-containing solution 2, may be added to the outer periphery of the vessel and the ammonia solution added to the center of the vessel. It should further be understood that although the foregoing embodiment utilizes three reaction vessels, the process of the present invention may be conducted utilizing a lesser or greater number of reaction vessels depending on the characteristics desired in the final product. Although the foregoing embodiment of the reaction utilizes the mixing and flows as shown, reverse flows may be used as well. Furthermore, a portion of the solids discharged from the third reactor may be recycled to coarsen and densify the particles as desired.

In addition, the present invention provides new valve metal pentoxide precursors, in particular new niobium pentoxide hydrates and new tantalum pentoxide hydrates. The valve metal pentoxide hydrates of the present invention may be processed to produce advantageous valve metal pentoxides. The valve metal pentoxide hydrates of the present invention are characterized by having a line broadened d-value under x-ray analysis at $6 \pm 0.3$, $3 \pm 0.2$ and $1.8 \pm 0.1$ and a fluoride content less than 500 parts per million (ppm), preferably less than 150 ppm. Embodiments of valve metal pentoxide precursors of the present invention may be further characterized as:

(a) niobium pentoxide hydrate having a BET surface area of less than 2 $m^2/g$, preferably less than 1 $m^2/g$, more preferably less than 0.5 $m^2/g$;
(b) niobium pentoxide hydrate having a BET surface area greater than 2 $m^2/g$, preferably greater than 6 $m^2/g$, more preferably greater than 50 $m^2/g$;
(c) tantalum pentoxide hydrate having a BET surface area less than 3 $m^2/g$, preferably less than 2 $m^2/g$, more preferably less than 1 $m^2/g$; and
(d) tantalum pentoxide hydrate having a BET surface area greater than 3 $m^2/g$, preferably greater than 7 $m^2/g$, more preferably greater than 11 $m^2/g$.

The valve-metal pentoxide precursors of the present invention may be advantageously produced by the process of the present invention by separating the valve-metal pentoxide precursor prior to converting the precursor to a valve-metal pentoxide.

The present invention also provides new valve metal pentoxide powders by calcining the valve metal pentoxide precursors. A first embodiment of such valve metal pentoxide powder may be characterized as low surface area, high density, substantially spherical agglomeration of calcined niobium pentoxide particles having a BET surface area less than 2 $m^2/g$, preferably less than 1 $m^2/g$ and more preferably less than 0.75 $m^2/g$ or less and a packed bulk density greater than 1.8 g/cc, preferably greater than 1.9, even more preferably greater than 2 g/cc.

A second embodiment of valve metal pentoxide may be characterized as high surface area, low bulk density, calcined, niobium pentoxide particles having a BET surface area greater than 2 $m^2/g$, preferably greater than 2.5 $m^2/g$, more preferably greater than 3 $m^2/g$, even more preferably greater than 4 $m^2/g$, and in some cases yet even more preferably greater than 6 $m^2/g$, and a packed bulk density of less than 1.8 g/cc, preferably less than 1 g/cc and in some cases more preferably less than 0.75 g/cc.

A third embodiment of valve metal pentoxide may be characterized as low surface area, high bulk density, substantially spherical agglomerates of calcined, tantalum pentoxide particles having a BET surface area of less than 3 $m^2/g$, preferably less than 2 $m^2/g$, more preferably less than 1 $m^2/g$, and in some cases yet even more preferably less than 0.75 $m^2/g$ or lower, e.g. about 0.4 $m^2/g$ or lower and a packed bulk density greater than 3 g/cc, preferably greater than 3.5 g/cc, more preferably greater than 3.8 g/cc and in some cases more preferably greater than 4 g/cc or higher.

A fourth embodiment of valve metal pentoxide may be characterized as high surface area, low bulk density, calcined, tantalum pentoxide particles having a BET surface area greater than 3 $m^2/g$, preferably greater than 4 $m^2/g$, more preferably greater than 5 $m^2/g$ and in some cases greater than 6 $m^2/g$ or even higher, say at least 7 or even

11 m$^2$/g and a packed bulk density less than 3.0 g/cc, preferably less than 2.5 g/cc, more preferably less than 2 g/cc and in some cases even more preferably less than 1 g/cc, e.g. about 0.75 g/cc.

In the case of low density, high surface area powders, a substantial number of particles are less than 5 micrometers in size. For instance although some of the material may be agglomerated to larger particles, typically 25% or more the particles, e.g. at least 30% and up to 80%, of the particles are less than 1 micrometer in size. In the case of high density, low surface area powders, most of the particles are agglomerated into large particles typically greater than 5 micrometers.

The products of the present invention may be advantageously produced in high purity by the process of the present invention. The fine particles produced by the present invention are highly reactive for use as dopants in various applications, such as electronics, ceramics, and as catalysts. The large dense spherical agglomerated particles have exceptional rheology and can be used for thermite (thermal reduction processes with active metals, i.e., aluminum) or glass applications. The large spherical particles blend well upon mixing with other glass forming ingredients. Furthermore, the large dense particles are not readily airborne in high gas flow streams, thus resulting in high melt efficiencies. Other applications for thermiting, for example, result in the large dense spherical particles giving greater packing factors, thus large thermite batches and greater productivity. In addition, the large, dense particles are not readily airborne during the thermite reaction, thus resulting in greater product recoveries.

The characterization of the products of this invention for BET surface area, bulk density and particle size can be effected by well known procedures which are commonly used in the art. For instance, BET surface area is determined by measuring a monolayer of nitrogen gas adsorbed on the surface of the particles. Fluoride content is determined by alkaline fusion and separation by volatilization as silicon tetrafluoride from a sulfuric acid solution; fluoride content is determined in a distillate using a specific ion electrode. Particle size can be determined by using laser beam light scattering techniques. While bulk density of agglomerates is determined by weighing a sample of known volume, packed bulk density is determined after mechanical tapping to effect maximum density, e.g. after 5000 taps. Morphology of the samples may be determined by visual inspection utilizing scanning electron microscope photographs as necessary.

The effectiveness and advantages of various aspects and embodiments of the present invention will be further illustrated by the following examples in which the valve metal pentoxide precursor was produced in a continuous process using three reaction vessels substantially as illustrated in Figure 1. Three 1500 milliliter (ml) beakers were used as the first, second and third reaction vessels with a nominal working volume of 1000 ml. The beakers were heated in a double boiler type set-up where each beaker was surrounded by a container of heat transfer fluid, e.g. water or other heat transfer fluid. In order to obtain a draft tube set-up, an inner tube with flights (or baffles) was utilized inside each beaker. Variable speed impellers were utilized in the bottom of each beaker as circulation means. Variable speed peristaltic pumps were utilized to control the feed rates of the valve metal-fluoro solution and ammonia solution to the first two beaker reactors.

EXAMPLE 1

This example illustrates a process of the present invention for making relatively high surface area, low density niobium pentoxide precursor and niobium pentoxide ($Nb_2O_5$) of the present invention. Reactor bath double boilers filled with deionized (DI) water were set to 98 °C. A solution of niobium oxyfluoride at a concentration of 159 g niobium/liter was preheated to about 76 °C and added to the first reactor at 18.5 ml/minute. A solution of 5N ammonia (7.8 wt. %) was added to the first reactor at 80.5 ml/minute. The reactants were agitated in the first reactor with a resultant average temperature of 74 °C and pH 8.5. The resulting suspension flowed into the second and third reactors for further mixing. The reaction was run for 330 minutes prior to collection of two liters of suspension which was filtered, washed and re-slurried with two liters of 5N ammonia solution at about 80 °C. The resulting slurry was filtered and washed four more times then filtered to provide a cake which was dried for sixteen hours at 85 °C, providing 187 g of hydrated niobium pentoxide cake containing 28.4% moisture and 200 ppm fluoride. The hydrated cake was calcined at 900 °C for four hours providing 97.5 g of niobium pentoxide particles containing 100 ppm fluoride where 90.9% of the material was below 1.5 microns in size (100% was below 24 microns) and high BET surface area of 2.82 m$^2$/g. The above and other process conditions and product characteristics are set forth in Table 1 below.

EXAMPLE 2

This example illustrates a process of the present invention for making a high density, high particle size (low surface area) niobium pentoxide precursor and niobium pentoxide ($Nb_2O_5$) of the present invention. The procedure of Example 1 was followed except that niobium solution was added to the first reactor at 13.1 ml/min and ammonia solution added at 98.2 ml/min providing a solution at an average temperature of 61 °C and pH 9.14. The resulting suspension flowed into the second reactor where an additional 5.6 ml/minute of niobium oxyfluoride solution was added with agitation. The resultant average temperature and pH of the second reactor solution were 73 °C and 8.28, respectively. The resulting second suspension flowed into the third reactor for further mixing. The reaction was run for 315 minutes, prior to collection of two liters of suspension which was filtered, washed and re-slurried, filtered and calcined as in Example 1. The uncalcined cake weighed 223.5 g (44.3% moisture) and contained 460 ppm fluoride. The calcined cake weighed 85.8 g, containing 180 ppm fluoride and 73.5% of the material was larger than 96 microns in size. Other process conditions and characteristics are in Table 1.

EXAMPLE 3

This example illustrates a process of the present invention for making a low surface area, high density niobium pentoxide precursor and niobium pentoxide ($Nb_2O_5$) product. The procedure of Example 1 was followed except that niobium solution was added to the first reactor at 3.5 ml/min and ammonia solution added at 7.8 ml/min providing a solution at an average temperature of 76 °C and pH 7.78. The resulting suspension flowed into the second reactor where an additional 15.6 ml/minute of ammonia solution was added with agitation. The resultant average temperature and pH of the second reactor solution were 68 °C and 8.48, respectively. The resulting second suspension flowed into the third reactor for further mixing. The reaction was run for 1100 minutes, prior to collection of two liters of suspension was collected, filtered, washed and re-slurried, filtered and calcined as in Example 1. The uncalcined cake weighed 143.1 g (29.07% moisture) and contained 1400 ppm fluoride. The calcined cake weighed 71.5 g, containing 200 ppm fluoride and had a BET surface area of 0.5 $m^2$/g; 77.5% of the material was between 8 and 32 microns in size. Other details and product characteristics are in Table 1.

EXAMPLE 4

This example illustrates a process of the present invention for making a high surface area, low density niobium pentoxide precursor and niobium pentoxide ($Nb_2O_5$) product. The procedure of Example 1 was followed except that niobium solution was added to the first reactor at 19 ml/min and ammonia solution added at 34.3 ml/min providing a solution at an average temperature of 80 °C and pH 6.28. The resulting suspension flowed into the second reactor where an additional 20.9 ml/minute of ammonia solution was added with agitation. The resulting second suspension at pH 8.46 was flowed into the third reactor for further mixing. The reaction was run for 375 minutes, prior to collection of two liters of suspension which was filtered, washed and re-slurried, filtered and calcined as in Example 1. The uncalcined cake weighed 216.6 g (49.9% moisture) and contained 3600 ppm fluoride. The calcined cake weighed 82.2 g, containing 300 ppm fluoride and had a BET surface area of 2.18 $m^2$/g; 30.5% of the material was smaller than 1 micron in size. Other details and product characteristics are in Table 1.

EXAMPLE 5

This example illustrates a process of the present invention for making a high surface area, low density niobium pentoxide precursor and niobium pentoxide ($Nb_2O_5$) product. The procedure of Example 1 was followed except that niobium solution was added to the first reactor at 56.5 ml/min and ammonia solution added at 210.4 ml/min providing a solution at an average temperature of 80 °C and pH 7.72. The resulting suspension flowed into the second reactor where additional ammonia solution was added with agitation to provide the second suspension at pH 8.49 and 70 °C which was flowed into the third reactor for further mixing. Two liters of suspension was collected, filtered, washed and re-slurried, filtered and calcined as in Example 1. The calcined cake contained 100 ppm fluoride and had a packed bulk density of 1.02 g/cc; 28.4% of the material was smaller than 1 micron in size. Other details and product characteristics are in Table 1.

EXAMPLE 6

This example illustrates a process of the present invention for making a high surface area, low density tantalum pentoxide precursor and tantalum pentoxide ($Ta_2O_5$) product. Reactor bath double boilers were filled with heat transfer oil at 60 °C. A solution of fluorotantalic acid at 80 g tantalum pentoxide/liter and 67 °C and added to a first reactor at 30 ml/minute along with a 5N (7.8 wt.%) ammonia solution at 50 ml/minute. The solutions were mixed in the first reactor to provide first vessel suspension at a temperature of 67 °C and pH 9.01 which overflowed into a second reactor for mixing at 72 °C and pH 8.73. The suspension flowed into the third reactor for mixing at 78 °C and pH 8.42. The reaction was run for 180 minutes prior to collection of two liters of suspension which was filtered, washed and re-slurried with two liters of 5N ammonia solution at 85 °C. The resulting slurry was filtered, washed four additional times and filtered to provide a wet cake which was dried for six hours at 100 °C. The wet cake weighed 121.7 g (2.43% moisture) and contained 50 ppm fluoride and was calcined at 900 °C for one hour to provide 108 g of dry, calcined cake containing less than 50 ppm fluoride, having a BET surface area of 6.7 $m^2$/g and a packed density of 1.81 g/cc; 78.6% of the calcined cake was smaller than 1 micron in size. Other process conditions and product characteristics are shown in Table 1.

EXAMPLE 7

This example illustrates the preparation of a low density tantalum pentoxide and precursor. The procedure of Example 6 was followed except that fluorotantalic acid solution at 66 °C was added to the first reactor at 30 ml/min and ammonia solution added at 35 ml/min providing a solution at an average temperature of 74 °C and pH 8.42. The resulting suspension flowed into the second reactor for additional mixing at 77 °C and pH 8.2 and then to a third reactor for mixing at 82 °C and pH 8.0. The reaction was run for 375 minutes prior to collection of two liters of suspension. 232 g of wet cake (11.9% moisture) contained 310 ppm fluoride. Other details and product characteristics are in Table 1.

EXAMPLE 8

This example illustrates the production of high surface area, low density tantalum pentoxide and precursor. The procedure of Example 6 was followed except that the fluorotantalic acid solution at 73 °C was added at 25 ml/min and the ammonia solution was added at 25 ml/min to provide a first suspension at 74 °C and pH 8.42. The first suspension was flowed into a second reactor for further mixing with an additional 50 ml/min of the ammonia solution to provide a second suspension at 60 °C and pH 9.5 which was flowed in to a third reactor for further mixing at 71 °C and pH 9.08. The reaction was run for 255 minutes, prior to collection of six liters of suspension. The wet cake contained less than 50 ppm fluoride. The calcined cake had a BET surface area of 4.96 $m^2$/g and a packed density of 2.96 g/cc.

EXAMPLE 9

This example illustrates the preparation of a low surface area, high density agglomerated tantalum pentoxide and precursor essentially following the procedure of Example 6 except that a fluorotantalic acid solution (87 g/l $Ta_2O_5$ and containing 0.7% EDTA) was added to the first reactor at a fixed rate and mixed with a 30% ammonia solution at a rate adjusted to provide a pH of 7.49. A first suspension at 64 °C was flowed to a second reactor and mixed with additional ammonia solution to provide a suspension at 61.8 °C and pH 8.55 which was flowed to a third reactor for further mixing at 63.5 °C and pH 8.14. The reaction was run for 240 minutes prior to collection of suspension which was filtered to provide a wet cake containing 90 ppm fluoride. the wet cake was calcined at 1050 °C for 1 hour providing a calcined powder with a BET surface area of 1.01 $m^2$/g and a packed density of 3.98 g/cc. Other process conditions and product characteristics are shown in Table 1.

EXAMPLE 10

This example illustrates the preparation of a high surface area, low density tantalum pentoxide and precursor by essentially following the procedure of Example 9 except that the first suspension was at 55.6 °C and pH 9.51. The second suspension was at 53.3 °C and pH 9.06 and the third suspension was at 55 °C and pH 8.84. The reaction was run for 240 minutes prior to collection of suspension. The wet cake was calcined at 900 °C providing powder having a BET surface area of 5.17 $m^2$/g and a packed density of 1.6 g/cc.

The results set forth in Table 1 indicate that a preferred process of the present invention may be utilized to produce a wide variety of niobium pentoxide precursors, niobium pentoxide ($Nb_2O_5$) powder products, tantalum pentoxide precursors and tantalum pentoxide ($Ta_2O_5$) powder products which fall within the scope of the present invention.

Table 1

| Example | 1 | 2 | 3 | 4 | 5 |
|---|---|---|---|---|---|
| Compound | $Nb_2O_5$ | $Nb_2O_5$ | $Nb_2O_5$ | $Nb_2O_5$ | $Nb_2O_5$ |
| pH Rx.1 | 8.52 | 9.14 | 7.78 | 6.28 | 7.72 |
| pH Rx.2 Total Residence Time (min) | 8.39 31 | 8.28 27 | 8.48 115 | 8.46 42 | 8.49 12 |
| Temperature | | | | | |

Table 1   (continued)

| Example | 1 | 2 | 3 | 4 | 5 |
|---|---|---|---|---|---|
| °C, Rx.1 | 74 | 61 | 76 | 80 | 80 |
| Rx. Split Rx.1%:Rx.2% | 100:0 | 70:30 | 33:67 | 62:38 | 76:67 |
| (ppm F) Filtered | 21500 | 80000 | 64000 | 13500 | 13500 |
| Washed | 260 | 460 | 1400 | 3600 | 2350 |
| Calcined | 100 | 100 | 200 | 300 | 100 |
| Settled Volume (ml) | 240 | 270 | 20 | 320 | 90 |
| Freefall Density (g/cc) | 1.24 | 1.57 | 1.51 | 1.23 | 0.74 |
| Packed Density (g/cc) | 1.71 | 1.84 | 2.06 | 1.62 | 1.02 |
| Uncalcined Percent Moisture | 28.4 | 44.3 | 29.1 | 49.9 | 35.8 |
| % < 1 μm | 70.3 | 15.3 | 1.4 | 30.5 | 28.4 |
| 90% <_μm | 1.5 | 150 | 27 | 96 | 20 |
| Surface Area (m$^2$/g) | 2.82 | -- | 0.5 | 2.18 | -- |

Rx.1 = Reaction in first reaction vessel

Rx.2 = Reaction in second reaction vessel

% < 1 μm = percentage of product smaller than 1 micrometer

90% < μm = the particle size where 90% of particles are less than or equal to the size

| Example | 6 | 7 | 8 | 9 | 10 |
|---|---|---|---|---|---|
| Compound | $Ta_2O_5$ | $Ta_2O_5$ | $Ta_2O_5$ | $Ta_2O_5$ | $Ta_2O_5$ |
| pH Rx.1 | 9.01 | 8.42 | 7.53 | 7.5 | 9.51 |
| pH Rx.2 | 8.73 | 8.2 | 9.5 | 8.5 | 9.06 |
| Total Residence Time (min) | 38 | 46 | 33 | 120 | 120 |
| Temperature °C, Rx.1 | 67 | 74 | 83 | 64 | 56 |
| Rx. Split Rx.1%:Rx.2% | 100:0 | 100:0 | 26:74 | 52:48 | 100:0 |
| (ppm F) Filtered | 54000 | 75000 | 7500 | 32000 | 96000 |
| Washed | 50 | 310 | <50 | 90 | 130 |
| Calcined | <50 | 200 | <50 | 120 | 70 |
| Settled Volume (ml) | 155 | 120 | 15 | 30 | 176 |
| Freefall | | | | | |

Table 1   (continued)

| Example | 6 | 7 | 8 | 9 | 10 |
|---|---|---|---|---|---|
| Density (g/cc) | 1.36 | 1.32 | 2.35 | 2.65 | 0.98 |
| Packed Density (g/cc) | 1.81 | 1.77 | 2.96 | 3.98 | 1.60 |
| Uncalcined Percent Moisture | 11.3 | 11.9 | 16.3 | 10 | 35 |
| % < 1 μm | 78.6 | 10.6 | 5.8 | 0 | 2.7 |
| 90% <_μm | 5 | 5 | 55 | 35 | 3.5 |
| Surface Area ($m^2/g$) | 6.7 | -- | 4.96 | 1.01 | 5.17 |
| Rx.1 = Reaction in first reaction vessel | | | | | |
| Rx.2 = Reaction in second reaction vessel | | | | | |
| % < 1 μm = percentage of product smaller than 1 micrometer | | | | | |
| 90% < μm = the particle size where 90% of particles are less than or equal to the size | | | | | |

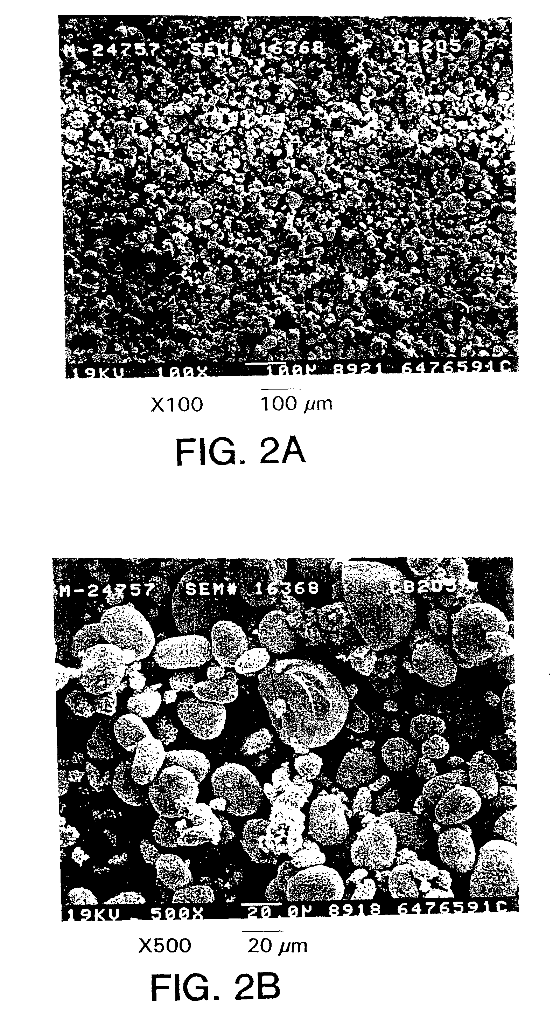

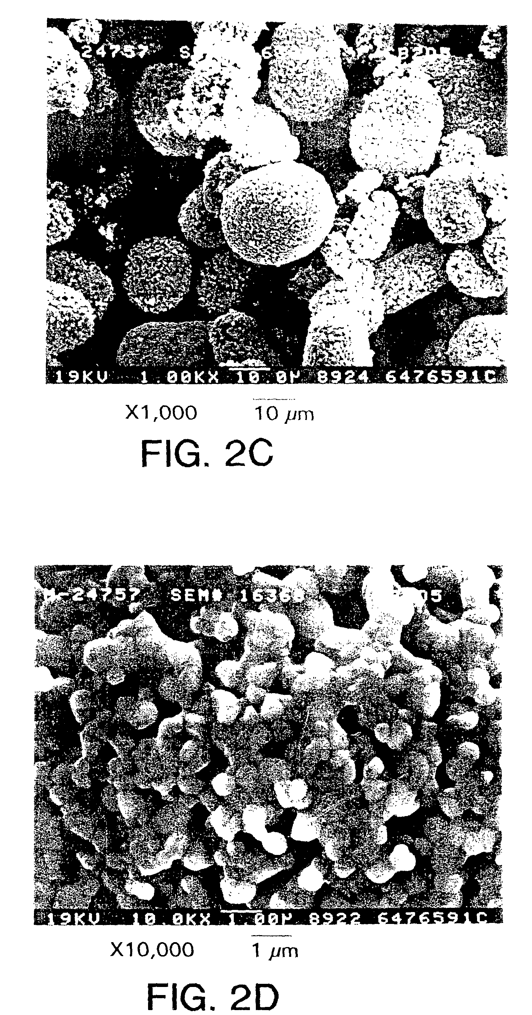

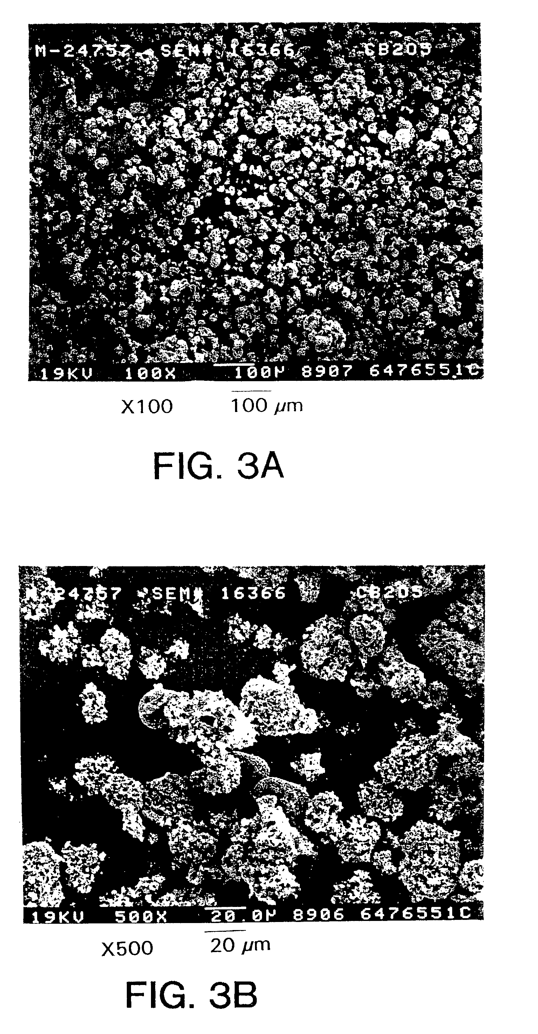

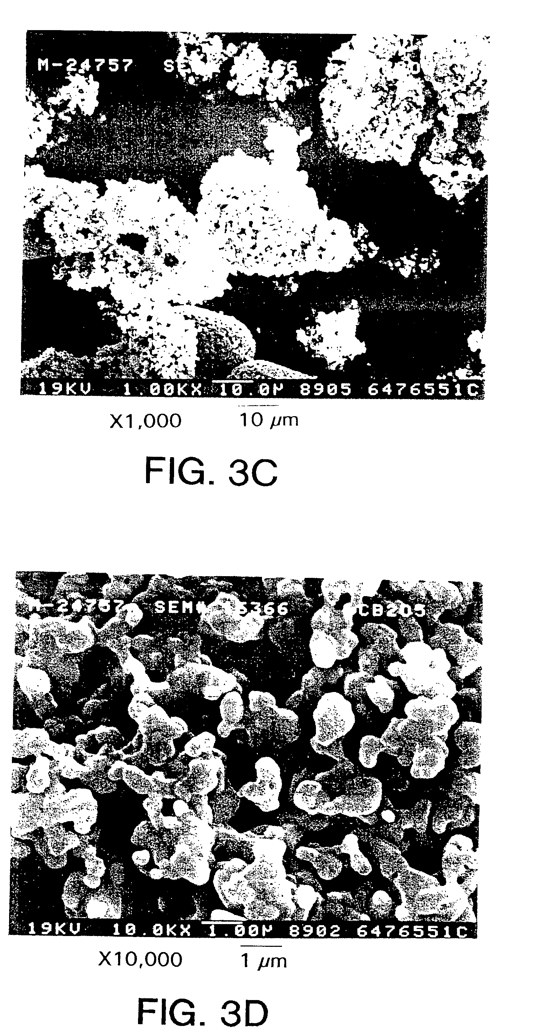

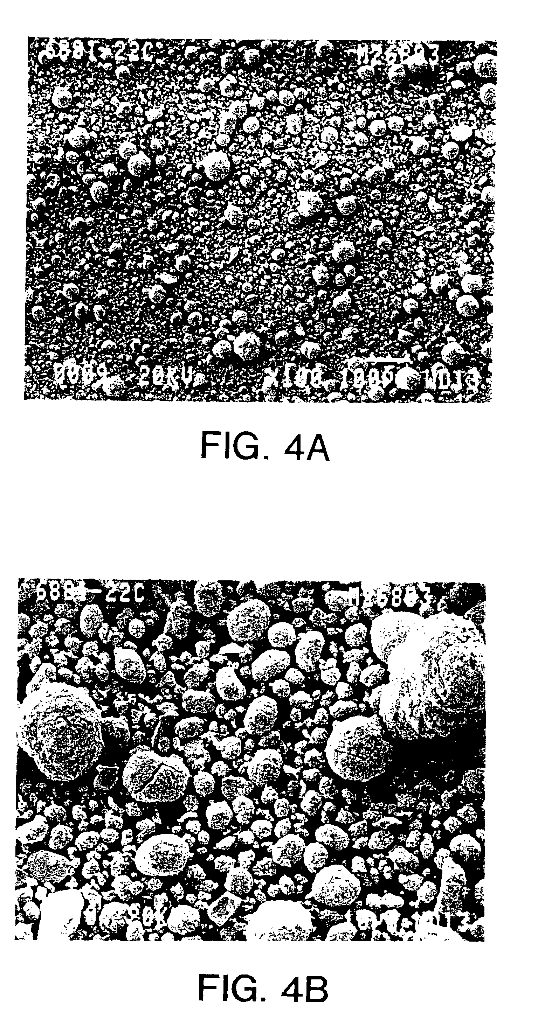

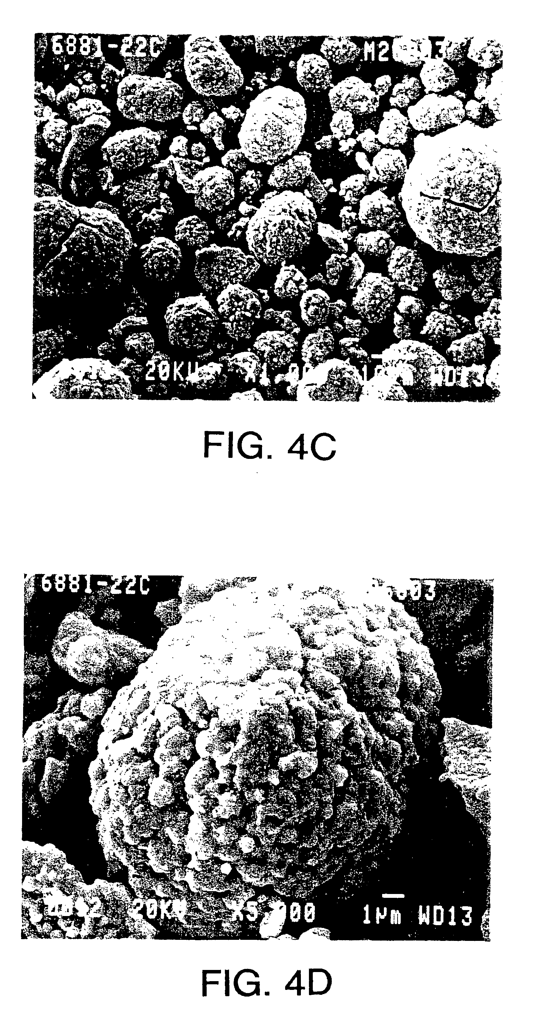

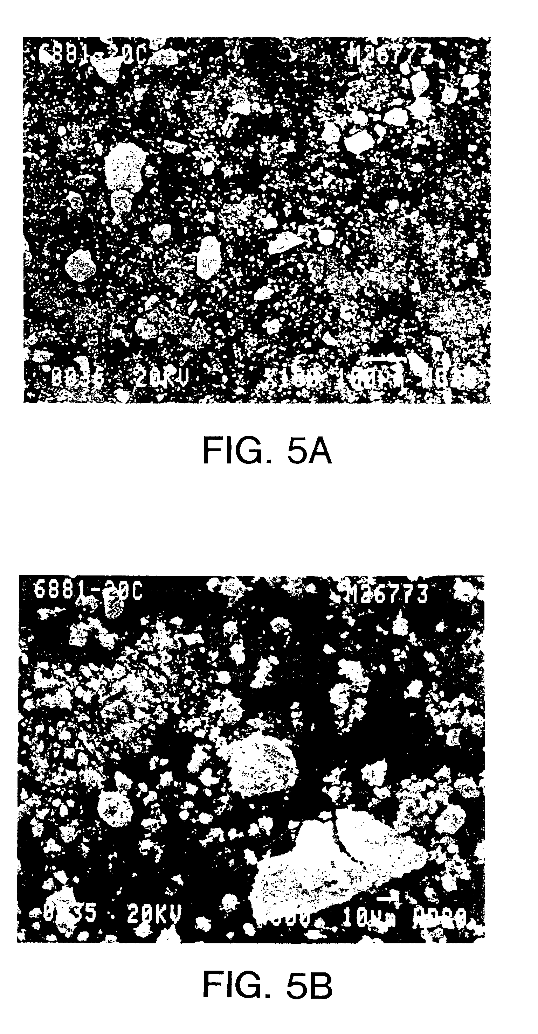

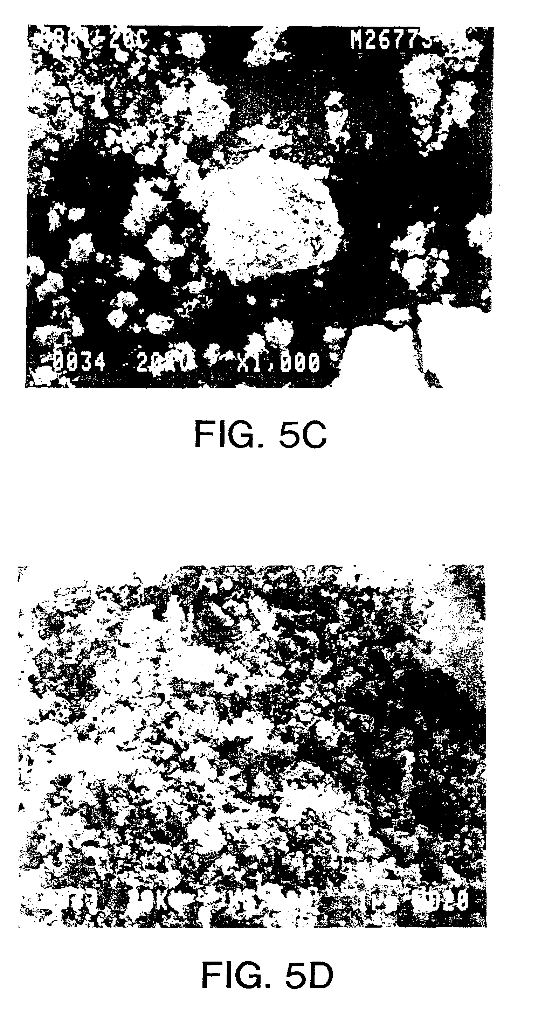

The results shown in Table 1 also illustrate that the rate of precipitation and residence time in the reactors for particle ripening can increase product density. Scanning electron photomicrographs of material precipitated near the isoelectric point of 7.7 for $Nb_2O_5$ with a 115 minute and a 12 minute residence time are shown in Figures 2 and 3, respectively. Figures 2a, 2b, 2c and 2d are scanning electron photomicrographs of the $Nb_2O_5$ produced in Example 3, at different magnifications. Figures 3a, 3b, 3c and 3d are scanning electron photomicrographs of the $Nb_2O_5$ produced in Example 5, at different magnifications. Figures 4a, 4b, 4c and 4d are scanning electron photomicrographs of the $Ta_2O_5$ produced in Example 9, at different magnifications. Figures 5a, 5b, 5c and 5d are scanning electron photomicrographs of the $Ta_2O_5$ produced in Example 10, at different magnifications. The "a" micrograph shows the product powder at a 100x magnification; "b", at 500x; "c", at 1,000x; and "d", at 10,000x.

With reference to Figures 2a-2d and 3a-3d, the low density, high surface area particles produced in Example 5 at a 12 minute residence time (shown in Figures 3a-3d) are visually significantly less dense than the particles produced in Example 3 at a 115 minute residence time (shown in Figures 2a-2d). The very closely packed crystallites shown in Figures 2a-2d also exhibit crystal intergrowth and densification as seen in the photomicrographs. Figures 5a-5d show the fine calcined particles of $Ta_2O_5$ produced at pH 9.5 with a 2 hour residence time while Figures 4a-4d show dense particles of $Ta_2O_5$ produced at a pH of 7.5 and a 120 minute residence time. These photomicrographs illustrate a range of particles which can be produced by the process of the present invention.

The examples discussed herein further illustrate that the process of the present invention produces ammonium fluoride and microcrystalline valve metal pentoxide hydrates with a readily defined line broadened x-ray diffraction pattern and the calcined pentoxide analog.

The Zeta potential of the pentoxide hydrate in the presence of ammonium fluoride is negative at pH's of 8 or greater and positive at pH's of 6 or less as shown by Figure 6. The isoelectric point or point of zero charge is in the range of pH 7-8. Precipitation at the isoelectric point allows agglomeration and formation of dense substantially spherical particles. This feature of the process of the present invention allows the control of precipitated particle sizes. At pH's above and below the isoelectric point, the charged particles repel one another preventing agglomeration and fine particles are precipitated.

It should be clearly understood that the forms of the present invention herein described are illustrative only and are not intended to limit the scope of the invention.

## Claims

1.   A process for producing a valve metal oxide compound comprising:

mixing in a first vessel an aqueous mixture of an ammonia solution and a fluoride-containing solution comprising fluorotantalic acid or niobium oxyfluoride at temperature, pH and residence time conditions to initiate precipitation of hydrated valve metal pentoxide, wherein said valve metal is tantalum or niobium;

transferring said mixture into at least one other vessel for mixing at the same or different temperature, pH and residence time conditions to continue further precipitation of hydrated valve metal pentoxide.

2. The process of claim 1 further comprising transferring said mixture to at least a third vessel and mixing at the same or different temperature, pH and residence time conditions to continue further precipitation of hydrated valve metal pentoxide.

3. The process according to claim 2 wherein additional ammonia solution or fluoride-containing solution is added to said second vessel or to said third vessel or both.

4. The process of claim 3 wherein said hydrated valve metal pentoxide is converted to valve metal pentoxide by calcining at a temperature greater than at least 790 °C to provide tantalum pentoxide or at a temperature greater than at least 650 °C to provide niobium pentoxide.

5. Niobium pentoxide powder characterized as (a) having a BET surface area less than 2 $m^2$/g and a packed bulk density greater than 1.8 g/cc or (b) having a BET surface area of greater than 2 $m^2$/g and a packed bulk density less than 1.8 g/cc.

6. Tantalum pentoxide powder characterized as (a) having a BET surface area less than 3 $m^2$/g and a packed bulk density of greater than 3.0 g/cc or (b) having a BET surface area greater than 3 $m^2$/g and a packed bulk density less than 3.0 g/cc.

7. A valve metal pentoxide precursor characterized by a line broadened d-values under x-ray analysis of $6 \pm 0.3$, $3 \pm 0.2$ and $1.8 \pm 0.1$, wherein the valve metal is niobium or tantalum and the precursor has a fluoride content less than 500 ppm.


**Patentansprüche**

1. Verfahren zur Herstellung einer Ventilmetalloxidverbindung, umfassend:

Mischen einer wässrigen Mischung einer Ammoniaklösung und einer fluoridhaltigen Lösung, die Fluortantalsäure oder Nioboxyfluorid umfaßt, in einem ersten Gefäß, bei Bedingungen von Temperatur, pH und Verweilzeit, bei welchen die Präzipitation von hydratisiertem Ventilmetallpentoxid initiiert wird, wobei das Ventilmetall Tantal oder Niob ist;

Übertragen des Gemisches in mindestens ein anderes Gefäß, um es bei den gleichen oder bei verschiedenen Bedingungen von Temperatur, pH und Verweilzeit zu mischen, um die Präzipitation des hydratisierten Ventilmetallpentoxides fortzusetzen.

2. Verfahren nach Anspruch 1, darüber hinaus umfassend das Übertragen des Gemisches in mindestens ein drittes Gefäß und Mischen bei den selben oder bei verschiedenen Bedingungen von Temperatur, pH und Verweilzeit, um die weitere Präzipitation des hydratisierten Ventilmetallpentoxids fortzusetzen.

3. Verfahren nach Anspruch 2, wobei zusätzliche Ammoniaklösung oder fluoridhaltige Lösung zu dem zweiten Gefäß oder zu dem dritten Gefäß oder zu beiden zugegeben wird.

4. Verfahren nach Anspruch 3, wobei das hydratisierte Ventilmetallpentoxid zu Ventilmetallpentoxid umgewandelt wird, indem bei einer Temperatur von größer als mindestens 790°C calciniert wird, um Tantalpentoxid zu erhalten oder bei einer Temperatur von größer als mindestens 650°C calciniert wird, um Niobpentoxid zu erhalten.

5. Niobpentoxidpulver, dadurch gekennzeichnet, das es (a) eine BET-Oberfläche von weniger als 2 $m^2$/g und eine gepackten Schüttdichte von größer als 1,8 g/$cm^3$ oder (b) eine BET-Oberfläche von größer als 2 $m^2$/g und eine gepackte Schütidichte von weniger als 1,8 g/$cm^3$ aufweist.

6. Tantalpentoxidpulver, dadurch gekennzeichnet, daß es (a) eine BET-Oberfläche von weniger als 3 $m^2$/g und eine gepackte Schüttdichte von größer als 3,0 g/$cm^3$ oder (b) eine BET-Oberfläche von größer als 3 $m^2$/g und eine gepackte Schüttdichte von weniger als 3,0 g/$cm^3$ aufweist.

**7.** Ventilmetallpentoxidvorstufe, dadurch gekennzeichnet, daß sie bei einer Röntgenstrahlenanalyse verbreiterte d-Linienwerte von $6 \pm 0,3$, $3 \pm 0,2$ und $1,8 \pm 0,1$ aufweist, wobei das Ventilmetall Niob oder Tantal ist und die Vorstufe einen Fluoridgehalt von weniger als 500 ppm aufweist.

**Revendications**

**1.** Procédé de fabrication d'un composé d'oxyde de métal de vanne comprenant les étapes consistant à :

mélanger dans un premier récipient un mélange aqueux d'une solution d'ammoniac et d'une solution contenant du fluorure comprenant de l'acide fluorotantalique ou de l'oxyfluorure de niobium à des conditions de température, de pH et de temps de séjour pour initier la précipitation de pentoxyde hydraté de métal de vanne, dans lequel ledit métal de vanne est du tantale ou du niobium ;

transférer ledit mélange dans au moins un autre récipient pour mélanger aux mêmes conditions ou à des conditions différentes de température, de pH et de temps de séjour pour poursuivre encore la précipitation du pentoxyde hydraté de métal de vanne.

**2.** Procédé selon la revendication 1, comprenant en outre le transfert dudit mélange dans au moins un troisième récipient et le mélange aux mêmes conditions ou à des conditions différentes de température, de pH et de temps de séjour pour poursuivre encore la précipitation du pentoxyde hydraté de métal de vanne.

**3.** Procédé selon la revendication 2, dans lequel de la solution d'ammoniac additionnelle ou de la solution contenant du fluorure est ajoutée dans ledit deuxième ou dans ledit troisième récipient ou dans les deux.

**4.** Procédé selon la revendication 3, dans lequel le pentoxyde hydraté de métal de vanne est transformé en pentoxyde de métal de vanne par une calcination à une température supérieure à au moins 790 °C pour fournir du pentoxyde de tantale ou à une température supérieure à au moins 650 °C pour fournir du pentoxyde de niobium.

**5.** Poudre de pentoxyde de niobium, caractérisée en ce qu'elle (a) présente un aire de surface BET inférieur à 2 m$^2$/g et une masse volumique en vrac tassée supérieure à 1,8 g/cc ou (b) un aire de surface BET supérieur à 2 m$^2$/g et une masse volumique en vrac tassée inférieure à 1,8 g/cc.

**6.** Poudre de pentoxyde de tantale, caractérisée en ce qu'elle (a) présente un aire de surface BET inférieur à 3 m$^2$/g et une masse volumique en vrac tassée supérieure à 3,0 g/cc ou (b) un aire de surface BET supérieur à 3 m$^2$/g et une masse volumique en vrac tassée inférieure à 3,0 g/cc.

**7.** Précurseur de pentoxyde de métal de vanne, caractérisé par une valeur d à raies élargies sous analyse aux rayons x de $6 \pm 0,3$, $3 \pm 0,2$ et $1,8 \pm 0,1$, où le métal de vanne est du niobium ou du tantale, et le précurseur à une teneur en fluorure inférieure à 500 ppm.

NH₃ Soln.

Nb Soln. ~ 2

4

16

NH₃ Soln. ~ 6

26

10   14   12

36

20   24   22

Liquids/Solid Separation

40

30   34   32

Solids Washing

50

Drying

60

FIG. 1

X100    $\overline{100 \ \mu m}$

# FIG. 2A

X500    $\overline{20 \ \mu m}$

# FIG. 2B

X1,000        10 μm

## FIG. 2C

X10,000        1 μm

## FIG. 2D

X100    100 μm

# FIG. 3A

X500    20 μm

# FIG. 3B

X1,000          10 μm

## FIG. 3C

X10,000          1 μm

## FIG. 3D

FIG. 4A

FIG. 4B

FIG. 4C

FIG. 4D

FIG. 5A

FIG. 5B

FIG. 5C

FIG. 5D